# EUROPÄISCHE PATENTSCHRIFT

(11) **EP 3 546 260 B1**
(45) Veröffentlichungstag und Bekanntmachung des Hinweises auf die Patenterteilung: **05.05.2021**
(21) Anmeldenummer: 18164894.0
(22) Anmeldetag: 29.03.2018
(51) Int. Cl.: B60J 7/10, B60J 5/06

(54) **PLANENVERSCHLUSSELEMENT, PLANE UND FAHRZEUGAUFBAU**
TARPAULIN CLOSURE ELEMENT, TARPAULIN AND VEHICLE BODY
ÉLÉMENT DE FERMETURE BÂCHE, BÂCHE ET CARROSSERIE

(43) Veröffentlichungstag der Anmeldung: 02.10.2019
(73) Patentinhaber: Schmitz Cargobull AG, 48341 Altenberge (DE)
(72) Erfinder: DERKS, Roger, 5922 XT Venlo (NL); GÖZZE LEIFHEIT, Ansgar, 48155 Münster (DE)
(74) Vertreter: Liedtke & Partner Patentanwälte

(56) Entgegenhaltungen:
- DE-U1-202009 003 328
- FR-A1- 2 688 463
- FR-A1- 2 832 366
- GB-A- 2 327 450

## Beschreibung

Die Erfindung betrifft ein Planenverschlusselement für eine Plane eines Fahrzeugaufbaus.

Die Erfindung betrifft weiterhin eine Plane für einen Fahrzeugaufbau und einen Fahrzeugaufbau mit einer solchen Plane.

Aus dem Stand der Technik sind allgemein Fahrzeugaufbauten für Nutzfahrzeuge bekannt, welche an zumindest einer Seite eine Plane, beispielsweise eine so genannte Gardinenplane, auch als Seitenvorhang bezeichnet, oder eine so genannte Spannplane aufweisen. Unter Nutzfahrzeugen werden dabei insbesondere Lastkraftwagen, Anhänger und Auflieger verstanden.

Eine solche Plane ist aus einem mechanisch flexiblen Material gebildet und mit einem oberen Ende an einem oberen Rahmenabschnitt des Fahrzeugaufbaus verschiebbar oder fest angeordnet. Ein Fahrzeugaufbau mit einer verschiebbaren Anordnung der Plane wird auch als Tautliner (englisch Curtainslider) oder Schiebeplanenaufbau bezeichnet. Um eine sichere und straffe Befestigung der Plane an einem Rahmen des Fahrzeugaufbaus zu realisieren, ist die Plane an einem unteren Ende mittels einer Mehrzahl von Planenverschlusselementen an einem unteren Rahmenabschnitt des Fahrzeugaufbaus befestigt, wobei die Planenverschlusselemente als so genannte Spannschnallen ausgebildet sind.

Einen solchen Fahrzeugaufbau mit einer Seitenwandplane und mehreren Planenverschlüssen beschreibt die DE 87 09 691 U1, wobei die Planenverschlüsse jeweils mehrere Riemenstücke umfassen, die über Haken und Ösen zu verbinden und mit einer Schnalle zu straffen sind. Die Schnalle ist an einem Chassis des Fahrzeugaufbaus über ein Riemenstück befestigt.

Weiterhin zeigt die FR 2 861 027 A1 einen Fahrzeugaufbau mit einer Seitenwandplane und mehreren Planenverschlusselementen, wobei jedes Planenverschlusselement einen oberen Riemen umfasst, welcher an einem Spannelement befestigt und mit der Seitenwandplane vernäht ist. Weiterhin umfasst jedes Planenverschlusselement einen unteren Riemen, an dessen freiem Ende ein Befestigungshaken zum Verbinden mit einem unteren Rahmenabschnitt des Fahrzeugaufbaus befestigt ist. An einer dem Befestigungshaken abgewandten Seite ist der untere Riemen mit dem Spannelement verbunden und mittels desselben spannbar.

Die DE 20 2009 003 328 U1 beschreibt eine Vorrichtung zum Spannen von Planen von Lastkraftwagen oder Transportcontainern mit einem an einer Plane befestigten, querschnittlich U-förmigen Grundkörper, einer am Grundkörper verschwenkbar angeordneten, querschnittlich U-förmigen Handhabungslasche und einem an der Handhabungslasche verschwenkbar angeordneten, in einer Gebrauchslage Profilbereiche hintergreifenden Klammerelement. Dabei ist die Handhabungslasche an dem Grundkörper in Spannrichtung der Plane in ihrer Position veränderbar angelenkt.

Ferner beschreibt die FR 2 832 366 A1 eine Spannvorrichtung für eine flexible Fahrzeugwand mit einer Schnalle und einem Riemen, der an seinem unteren Ende mit einem Verstauhaken versehen ist. Die Schnalle besteht aus einer Platte, die entweder mit einem Niet oder einem Riemen an der flexiblen Fahrzeugwand befestigt ist. Ein Hebel, der um eine im Plattenunterteil befindliche Achse drehbar gelagert ist, ermöglicht eine Öffnung mittels Schwerkraft, sobald er entriegelt ist. Der Spanngurt ist am Hebel exzentrisch angeordnet, so dass der Haken bei seiner Bewegung einen Weg erfährt, der dem doppelten Abstand zwischen der Hebelkante, die eine Kontaktzone des Gurtes bildet, und der Gelenkachse des Gurtes auf der Platte entspricht.

Weiterhin ist aus dem Stand der Technik allgemein bekannt, dass eine Höhe eines Fahrzeugaufbaus variabel einstellbar ist. Einen solchen Fahrzeugaufbau mit variabler Höhe beschreibt die EP 2 149 490 B2. Der Fahrzeugaufbau umfasst eine Stirnwand und eine Rückwand sowie ein sich zwischen der Stirnwand und der Rückwand sowie Seitenwänden erstreckendes, an Längsträgern und Querträgern festlegbares Hubdach, welche auf höhenverstellbaren vorderen und hinteren Eckrungen abgestützt sind, die über Kraftheber in unterschiedliche Höhenpositionen überführbar sind. Zwischen der Stirnwand und der Rückwand angeordnete Seitenwände sind als flexible Plane ausgebildet, welche, um der Höhenverstellung des Hubdaches folgen zu können, im Innenbereich in eine Falte gelegt sind, so dass diese Falte einem Höhenverstellmaß des Fahrzeugaufbaus entspricht.

Der Erfindung liegt die Aufgabe zu Grunde, ein gegenüber dem Stand der Technik verbessertes Planenverschlusselement für eine Plane eines Fahrzeugaufbaus, eine verbesserte Plane für einen Fahrzeugaufbau und einen verbesserten Fahrzeugaufbau anzugeben.

Hinsichtlich des Planenverschlusselements wird die Aufgabe erfindungsgemäß durch die im Anspruch 1 angegebenen Merkmale, hinsichtlich der Plane durch die im Anspruch 10 angegebenen Merkmale und hinsichtlich des Fahrzeugaufbaus durch die im Anspruch 11 angegebenen Merkmale gelöst.

Vorteilhafte Ausgestaltungen der Erfindung sind Gegenstand der Unteransprüche.

Das Planenverschlusselement für eine Plane eines Fahrzeugaufbaus umfasst ein Halteelement, welches an einem ersten Abschnitt zu einer Befestigung an der Plane eingerichtet ist, ein Spannelement, welches mit einem dem ersten Abschnitt gegenüberliegenden zweiten Abschnitt des Halteelements verbunden ist, und einen Riemen, welcher mit dem Spannelement spannbar gekoppelt ist. Weiterhin umfasst das Planenverschlusselement ein Rahmenbefestigungselement sowie eine Höheneinstellanordnung, welche eingerichtet ist, das Spannelement variabel in unterschiedlichen Abständen zum ersten Abschnitt des Halteelements zumindest mittelbar an der Plane zu befestigen.

Erfindungsgemäß ist das Rahmenbefestigungselement an einem dem Spannelement abgewandten Abschnitt des Riemens befestigt und zu einer Befestigung an einem Rahmenabschnitt des Fahrzeugaufbaus eingerichtet. Weiterhin ist das Halteelement als Riemen ausgebildet.

Mittels des Planenverschlusselements kann aufgrund der Höheneinstellanordnung in besonders einfacher und zuverlässiger Weise ein Spannen der Plane des Fahrzeugaufbaus insbesondere auch dann sichergestellt werden, wenn ein Dach des Fahrzeugaufbaus variabel in unterschiedlichen Höhen über einem Boden des Fahrzeugaufbaus positioniert werden kann. Dabei können aufgrund der Höheneinstellanordnung Höhenunterschiede zwischen einer maximalen Höhe und einer minimalen Höhe einer Befestigung des Daches über dem Boden mit besonders großen Werten ausgeglichen werden.

Insbesondere ermöglicht die Höheneinstellanordnung, dass der Riemen besonders kurz ausgeführt sein kann und dennoch ein Spannen der Plane auch dann sicher möglich ist, wenn das Dach in maximaler Höhe über dem Boden angerordnet ist. Aufgrund der Kürze des Riemens können einerseits kostenintensive und große sowie gleichzeitig aufwändig zu bedienende Aufbewahrungs- und/oder Sicherungsanordnungen für den Riemen entfallen oder zumindest signifikant einfacher und kleiner ausgeführt werden. Aufgrund der besonders kurzen Ausführung des Riemens ist eine Länge eines Abschnitts des Riemens zwischen dem Spannelement und einem freien Endes des Riemens verkürzt. Hierdurch können eine Gefahr von Beschädigungen des Fahrzeugaufbaus selbst sowie anderer Objekte in einer Umgebung des Fahrzeugaufbaus und eine Gefahr von Verletzungen in der Umgebung des Fahrzeugaufbaus befindlicher Verkehrsteilnehmer verringert werden, da auch bei einem Lösen des freien Endes des Riemens aus einer Aufbewahrungs- und/oder Sicherungsanordnung und einer daraus resultierenden möglichen freien Bewegung des freien Endes ein Wirkungsradius und somit die Gefahr einer Berührung von Objekten und Personen mit dem freien Ende verringert sind.

Die Ausbildung des Halteelements als Riemen ermöglicht eine besonders einfache und kostengünstige Herstellung bei gleichzeitig hoher Zuverlässigkeit, Langlebigkeit und Handhabbarkeit.

In möglichen Ausgestaltungen des Planenverschlusselements kann das Halteelement auch aus anderen geeigneten Elementen gebildet sein oder diese umfassen.

In einer Weiterbildung des Planenverschlusselements ist das Spannelement mit einem dem ersten Abschnitt gegenüberliegenden zweiten Abschnitt des Halteelements verbunden oder verschiebbar auf dem Halteelement angeordnet. Hierdurch kann die Höheneinstellung einfach und sicher realisiert werden und das Spannelement und der Riemen sind verliersicher an der Plane anordbar.

In einer möglichen Ausgestaltung des Planenverschlusselements umfasst die Höheneinstellanordnung zumindest ein an dem Halteelement oder an einem am ersten Abschnitt des Halteelements angeordneten Planenbefestigungselement befestigtes oder befestigbares erstes Befestigungselement, welches zumindest in einem geöffneten Zustand der Höheneinstellanordnung beabstandet zu dem zweiten Abschnitt des Halteelements angeordnet oder anordbar ist. Weiterhin umfasst das Planenverschlusselement in dieser Ausgestaltung zumindest ein in Längsausdehnung des Halteelements zwischen dem ersten und zweiten Abschnitt desselben an dem Halteelement oder an dem Spannelement befestigtes oder befestigbares zweites Befestigungselement, wobei das erste und das zweite Befestigungselement in mechanischen Wirkzusammenhang bringbar sind und in diesem mechanischen Wirkzusammenhang ein geschlossener Zustand der Höheneinstellanordnung ausgebildet ist. Eine solche Ausgestaltung ermöglicht eine besonders einfache Höheneinstellung des Planenverschlusselements.

Eine mögliche Weiterbildung des Planenverschlusselements sieht vor, dass mehrere erste Befestigungselemente in Längsrichtung des Halteelements beabstandet zueinander an diesem und/oder an dem Planenbefestigungselement beabstandet zueinander angeordnet sind. Dies ermöglicht eine wahlweise Anordnung des Spannelements in unterschiedlichen Positionen, das heißt relativ zum Boden des Fahrzeugaufbaus in unterschiedlichen Höhen, so dass die Anordnung des Spannelements jeweils an unterschiedliche Höhen des Daches über dem Boden angepasst werden kann.

In einer weiteren möglichen Ausgestaltung des Planenverschlusselements ist das zumindest eine erste Befestigungselement ein Bolzen und das zumindest eine zweite Befestigungselement ist eine Bolzenaufnahme oder umgekehrt. Mittels des zumindest einen Bolzens und der zumindest einen korrespondierenden Bolzenaufnahme ist das Spannelement in dem geschlossenen Zustand der Höheneinstellanordnung sehr zuverlässig und sicher zumindest mittelbar an der Plane befestigbar. Gleichzeitig zeichnen sich der Bolzen und die Bolzenaufnahme durch sehr geringe Kosten aus.

Beispielsweise ist der Bolzen durch eine Schraube und eine damit korrespondierende Schraubenmutter gebildet. Diese Ausführung ist besonders kostengünstig und einfach handhabbar.

Gemäß einer möglichen Ausgestaltung des Planenverschlusselements umfasst das Halteelement zumindest eine Schlaufe, welche zur Aufnahme des Bolzens eingerichtet ist. Eine solche Schlaufe ist mit besonders geringem Aufwand ohne die Verwendung zusätzlicher Bauteile bereits während einer Herstellung des Halteelements erzeugbar und erlaubt eine einfache Anordnung des Bolzens.

Gemäß einer weiteren möglichen Ausgestaltung des Planenverschlusselements ist das zumindest eine erste Befestigungselement ein Pilzkopfzapfen und das zumindest eine zweite Befestigungselement ist eine Pilzkopfzapfenaufnahme oder umgekehrt. Diese Ausführung zeichnet sich neben ihrer hohen Zuverlässigkeit und Sicherheit der zumindest mittelbaren Befestigung des Spannelements im geschlossenen Zustand der Höheneinstellanordnung an der Plane durch eine besonders einfache Handhabbarkeit aus. Insbesondere ist der geschlossene Zustand der Höheneinstellanordnung dabei sehr schnell und besonders einfach, insbesondere ohne das Erfordernis einer Verwendung eines Werkzeugs, durchführbar. Hieraus ergibt sich für einen Nutzer insbesondere bei einer Verwendung mehrerer Planenverschlusselemente für eine Plane eine signifikante Zeitersparnis beim Schließen und Öffnen der Höheneinstellanordnung.

Beispielsweise weist die Pilzkopfzapfenaufnahme eine schlüssellochförmige Öffnung auf, wobei ein erster Abschnitt der Öffnung größer als ein Pilzkopf des Pilzkopfzapfens ist und ein zweiter Abschnitt der Öffnung kleiner als der Pilzkopf und größer als ein Zapfen des Pilzkopfzapfens ist. Hierbei wird eine Einführung des Pilzkopfes durch den ersten Abschnitt der Öffnung ermöglicht. Anschließend kann der Pilzkopfzapfen in den zweiten Abschnitt der Öffnung verschoben werden, wobei der Pilzkopf sich an den den zweiten Abschnitt umgebenden Materialabschnitten abstützt. Zum Beispiel ist dabei der zweite Abschnitt der Öffnung dem Rahmenbefestigungselement zugewandt und der erste Abschnitt der Öffnung dem Rahmenbefestigungselement abgewandt, so dass in einem am Fahrzeugaufbau verspannten Zustand des Planenverschlusselements der Pilzkopfzapfen sicher in dem zweiten Abschnitt der Öffnung gehalten und gegen ein Herausgleiten gesichert ist. Diese Ausführung der Pilzkopfzapfenaufnahme ermöglicht einen besonders einfach realisierbaren, sicheren und zuverlässigen Verschluss der Höheneinstellanordnung.

Eine mögliche Ausgestaltung des Planenverschlusselements sieht vor, dass das zumindest eine erste Befestigungselement ein Hakenelement ist und das zumindest eine zweite Befestigungselement eine Hakenaufnahme ist oder umgekehrt. Auch diese Ausgestaltung zeichnet sich neben ihrer hohen Zuverlässigkeit und Sicherheit der zumindest mittelbaren Befestigung des Spannelements im geschlossenen Zustand der Höheneinstellanordnung an der Plane durch eine besonders einfache Handhabbarkeit aus. Auch hierbei ist der geschlossene Zustand der Höheneinstellanordnung sehr schnell und besonders einfach, insbesondere ohne das Erfordernis einer Verwendung eines Werkzeugs, durchführbar, so dass sich für einen Nutzer insbesondere bei einer Verwendung mehrerer Planenverschlusselemente für eine Plane eine signifikante Zeitersparnis beim Schließen und Öffnen der Höheneinstellanordnung ergibt.

Die erfindungsgemäße Plane für einen Fahrzeugaufbau umfasst zumindest ein zuvor beschriebenes Planenverschlusselement und zeichnet sich somit aufgrund der Höheneinstellanordnung durch eine besonders einfach durchführbare und zuverlässige Spannbarkeit aus. Dies ist insbesondere auch dann der Fall, wenn das Dach des Fahrzeugaufbaus variabel in unterschiedlichen Höhen über dem Boden des Fahrzeugaufbaus positioniert werden kann. Dabei können aufgrund der Höheneinstellanordnung Höhenunterschiede zwischen einer maximalen Höhe und einer minimalen Höhe einer Befestigung des Daches über dem Boden mit besonders großen Werten ausgeglichen werden.

In einer möglichen Ausgestaltung der Plane ist das Halteelement des zumindest einen Planenverschlusselements an einem planenseitigen ersten Abschnitt kraft-, stoff- und/oder formschlüssig und somit sehr sicher an der Plane befestigt, beispielsweise vernäht, vernietet, verschraubt und/oder verklebt.

Der erfindungsgemäße Fahrzeugaufbau für ein Nutzfahrzeug umfasst zumindest eine zuvor beschriebene Plane und zeichnet sich somit aufgrund der Höheneinstellanordnung durch eine besonders einfach durchführbare und zuverlässige Spannbarkeit der Plane und daraus folgend durch einen sicheren und zuverlässigen Verschluss bei gleichzeitig hoher Variabilität aus.

Unter Nutzfahrzeugen werden dabei insbesondere Lastkraftwagen, Anhänger und Auflieger verstanden, wobei der Fahrzeugaufbau Bestandteil eines Lastkraftwagens, Anhängers oder Aufliegers sein kann.

Gemäß einer möglichen Ausgestaltung des Fahrzeugaufbaus umfasst dieser eine Stirnwand, eine Rückwand, zwei Seitenwände, einen Boden und ein sich zwischen der Stirnwand, der Rückwand und den Seitenwänden erstreckendes Dach, wobei eine Höhe des Daches über dem Boden variabel einstellbar ist. Die Höhenverstellbarkeit des Daches ermöglicht eine Verringerung eines Strömungswiderstands des Fahrzeugaufbaus und somit eine Verringerung eines zur Bewegung des Fahrzeugaufbaus erforderlichen Energiebedarfs.

Gemäß einer weiteren möglichen Ausgestaltung des Fahrzeugaufbaus umfasst zumindest eine der Seitenwände die zumindest eine Plane, wobei die Plane in einem zumindest teilweise geschlossenen Zustand mit einem oberen Planenabschnitt an dem Dach und einem dem oberen Planenabschnitt gegenüberliegenden unteren Planenabschnitt mittels des zumindest einen Planenverschlusselements gespannt an dem Boden befestigt ist. Die mechanisch flexible Plane wird, um der Höhenverstellung des Daches folgen zu können, beispielsweise im Innenbereich des Fahrzeugaufbaus in eine Falte gelegt, so dass diese Falte einem Höhenverstellmaß des Fahrzeugaufbaus entspricht. Aufgrund des zumindest einen Planenverschlusselements, in einem möglichen Ausführungsbeispiel aufgrund mehrerer Planenverschlusselemente, kann bei jeder eingestellten Höhe des Daches in einfacher Weise eine Spannung der Plane sichergestellt werden und somit Bewegungen, insbesondere ein Flattern, derselben während einer Bewegung des Fahrzeugaufbaus und daraus folgend erhöhte Strömungswiderstände und Geräuschentwicklungen minimiert werden.

Eine mögliche Ausgestaltung des Fahrzeugaufbaus sieht vor, dass sich bei zumindest einer ersten Höhe des Daches über dem Boden bei geschlossener und gespannter Plane die Höheneinstellanordnung in einem geöffneten Zustand befindet und bei zumindest einer kleiner als die erste Höhe ausgebildeten zweiten Höhe des Daches über dem Boden bei geschlossener und gespannter Plane sich die Höheneinstellanordnung in einem geschlossenen Zustand befindet, wobei in dem geschlossenen Zustand das erste und das zweite Befestigungselement in mechanischen Wirkzusammenhang gebracht sind.

Eine weitere mögliche Ausgestaltung des Fahrzeugaufbaus sieht vor, dass der obere Planenabschnitt in Querrichtung der Plane an dem Dach verschiebbar befestigt ist und die Plane somit eine Schiebeplane bildet. Dies ermöglicht eine einfache Herstellung eines Zugangs zu einem Inneren des Fahrzeugaufbaus sowie eine einfache Be- und Entladung des Fahrzeugaufbaus.

Ausführungsbeispiele der Erfindung werden im Folgenden anhand von Zeichnungen näher erläutert.

Darin zeigen:
- Figur 1: schematisch eine Seitenansicht eines Nutzfahrzeugs,
- Figur 2: schematisch eine perspektivische Darstellung eines Ausschnitts einer Plane eines Fahrzeugaufbaus und eines ersten Ausführungsbeispiels eines an der Plane befestigten Planenverschlusselements in einem geöffneten Zustand einer Höheneinstellanordnung,
- Figur 3: schematisch eine perspektivische Darstellung eines Ausschnitts der Plane und des Planenverschlusselements gemäß Figur 2 in einem weiteren geöffneten Zustand der Höheneinstellanordnung,
- Figur 4: schematisch eine perspektivische Darstellung eines Ausschnitts der Plane und des Planenverschlusselements gemäß Figur 2 in einem geschlossenen Zustand der Höheneinstellanordnung,
- Figur 5: schematisch eine Draufsicht eines Ausschnitts einer Plane eines Fahrzeugaufbaus und eines zweiten Ausführungsbeispiels eines an der Plane befestigten Planenverschlusselements in einem geöffneten Zustand einer Höheneinstellanordnung,
- Figur 6: schematisch eine Draufsicht des Ausschnitts der Plane und des Planenverschlusselements gemäß Figur 5 in einem geschlossenen Zustand der Höheneinstellanordnung,
- Figur 7: schematisch eine perspektivische Ansicht eines dritten Ausführungsbeispiels eines Planenverschlusselements,
- Figur 8: schematisch eine Draufsicht eines vierten Ausführungsbeispiels eines Planenverschlusselements in einem ersten geschlossenen Zustand einer Höheneinstellanordnung mit einer teiltransparenten Darstellung eines Spannelements und eines Riemens,
- Figur 9: schematisch eine Schnittdarstellung des Planenverschlusselements gemäß Figur 8 und
- Figur 10: schematisch eine Draufsicht des Planenverschlusselements gemäß Figur 8 in einem zweiten geschlossenen Zustand der Höheneinstellanordnung.

Einander entsprechende Teile sind in allen Figuren mit den gleichen Bezugszeichen versehen.

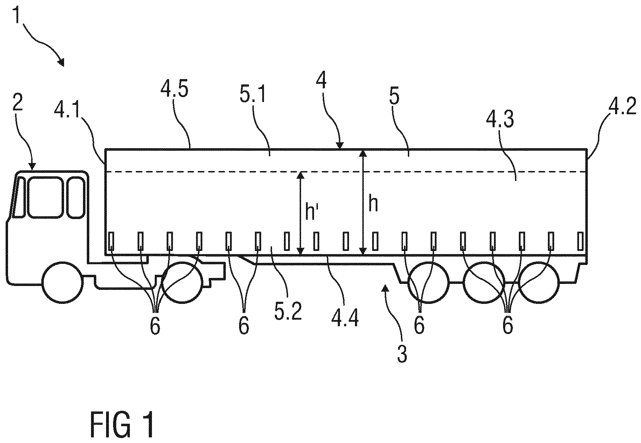

In **Figur 1** ist eine Seitenansicht eines möglichen Ausführungsbeispiels eines Nutzfahrzeugs 1 dargestellt, wobei das Nutzfahrzeug 1 ein so genannter Sattelzug, auch als Sattelkraftfahrzeug bezeichnet, ist. Der Sattelzug ist dabei ein aus einer Sattelzugmaschine 2 und einem Sattelauflieger 3 gebildetes Gespann.

Der Sattelauflieger 3 umfasst einen Fahrzeugaufbau 4, welcher als so genannter Tautliner (englisch Curtainslider) oder Schiebeplanenaufbau ausgebildet ist. Der Fahrzeugaufbau 4 umfasst eine Stirnwand 4.1, eine Rückwand 4.2, zwei Seitenwände 4.3, wobei nur eine Seitenwand 4.3 dargestellt ist, einen Boden 4.4 und ein sich zwischen der Stirnwand 4.1, der Rückwand 4.2 und den Seitenwänden 4.3 erstreckendes Dach 4.5.

Zumindest eine der Seitenwände 4.3 umfasst eine mechanisch flexible Plane 5, welche im dargestellten geschlossenen Zustand mit einem oberen Planenabschnitt 5.1 an dem Dach 4.5, insbesondere an einem nicht näher dargestellten oberen Rahmenabschnitt eines Rahmens des Fahrzeugaufbaus 4, befestigt ist. Dabei ist der obere Planenabschnitt 5.1 in Querrichtung der Plane 5 verschiebbar am Dach 4.5 befestigt, wobei zu diesem Zweck am Dach 4.5 eine nicht näher dargestellte Führung, beispielsweise eine Führungsschiene, ausgebildet ist und am oberen Planenabschnitt 5.1 mit der Führung korrespondierende Führungselemente, beispielsweise in die Führungsschiene eingreifende Führungsrollen, angeordnet sind. Somit ist die Plane 5 eine so genannte Gardinenplane, auch als Seitenvorhang bezeichnet.

An einem dem oberen Planenabschnitt 5.1 gegenüberliegenden unteren Planenabschnitt 5.2 ist die Plane 5 im dargestellten geschlossenen Zustand mittels mehrerer Planenverschlusselemente 6 gespannt an dem Boden 4.4, insbesondere an einem nicht näher dargestellten unteren Rahmenabschnitt des Rahmens des Fahrzeugaufbaus 4, befestigt.

Zu einer Verbesserung einer Aerodynamik des Sattelaufliegers 3 ist eine Höhe h des Daches 4.5 über dem Boden 4.4 in einer Stufe oder mehreren Stufen variabel einstellbar. Dabei kann eine Einstellung der Höhe h über eine gesamte Länge des Fahrzeugaufbaus 4 in gleicher Weise erfolgen. Alternativ nimmt die Höhe h über die Länge des Fahrzeugaufbaus 4 ab oder zu.

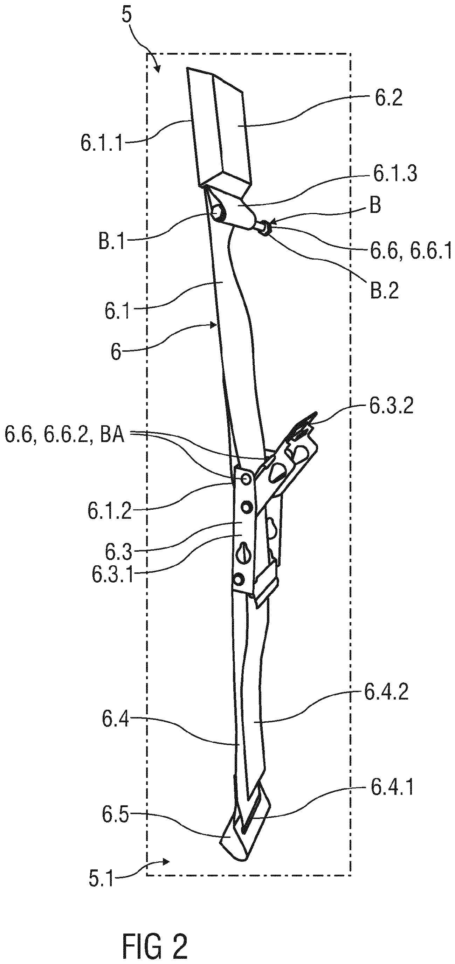

Um in unterschiedlichen Höhen h, h' des Daches 4.5 über dem Boden 4.4 eine sichere sowie zuverlässige Befestigung und Verspannung der Plane 5 bei gleichzeitig sicherer und einfach handhabbarer Ausbildung der Planenverschlusselemente 6 zu ermöglichen, umfassen die Planenverschlusselemente 6 jeweils eine in den Figuren 2 bis 13 dargestellte Höheneinstellanordnung 6.6.

**Figur 2** zeigt eine perspektivische Darstellung eines Ausschnitts einer Plane 5 eines Fahrzeugaufbaus 4 und eines möglichen ersten Ausführungsbeispiels eines an der Plane 5 befestigten Planenverschlusselements 6 in einem geöffneten Zustand einer Höheneinstellanordnung 6.6.

Das Planenverschlusselement 6 ist dabei als so genannte Spannschnalle ausgebildet und umfasst ein als erster Riemen ausgebildetes Halteelement 6.1, welches mit einem planenseitigen ersten Abschnitt 6.1.1 an der Plane 5 befestigt ist. An dem ersten Abschnitt 6.1.1 des Halteelements 6.1 ist ein Planenbefestigungselement 6.2 angeordnet, mittels welchem das Halteelement 6.1 mittels einer oder mehrerer nicht gezeigter Verschraubungen an der Plane 5 befestigt ist. Alternativ oder zusätzlich ist das Halteelement 6.1 des zumindest einen Planenverschlusselements 6 mit dem planenseitigen ersten Abschnitt 6.1.1 mittels geeigneten anderen kraft-, stoff- und/oder formschlüssigen Verbindungen, beispielsweise Vernähungen, Vernietungen und/oder Verklebungen, an der Plane 5 befestigt.

Weiterhin umfasst das Planenverschlusselement 6 ein Spannelement 6.3 mit einem Grundkörper 6.3.1 und einem Spannhebel 6.3.2. Der Grundkörper 6.3.1 ist dabei mit seinem oberen Ende einem dem ersten Abschnitt 6.1.1 gegenüberliegenden zweiten Abschnitt 6.1.2 des Halteelements 6.1 verbunden.

Zusätzlich umfasst das Planenverschlusselement 6 einen Riemen 6.4, im Folgenden als zweiter Riemen 6.4 bezeichnet, welcher mit dem Spannelement 6.3, beispielsweise dem Spannhebel 6.3.2, spannbar gekoppelt ist.

An einem dem Spannelement 6.3 abgewandten Abschnitt 6.4.1 des zweiten Riemens 6.4 ist ein im dargestellten Ausführungsbeispiel hakenförmiges Rahmenbefestigungselement 6.5 befestigt, welches zu einer Befestigung an dem Boden 4.4 des Fahrzeugaufbaus 4, insbesondere dem unteren Rahmenabschnitt, eingerichtet ist.

In dem geöffneten Zustand der Höheneinstellanordnung 6.6 weist das Planenverschlusselement 6 ausgehend vom planenseitigen ersten Abschnitt 6.1.1 des Halteelements 6.1 hin zum Rahmenbefestigungselement 6.5 bei maximal gelöstem zweiten Riemen 6.4 seine maximale Länge auf. In diesem Zustand der Höheneinstellanordnung 6.6 ist das Planenverschlusselement 6 beispielsweise dazu eingerichtet, die Plane 5 bei der in Figur 1 größeren Höhe h des Daches 4.5 über dem Boden 4.4 an diesem zu verspannen. Zu diesem Zweck wird das Rahmenbefestigungselement 6.5 am Boden 4.4 des Fahrzeugaufbaus 4, insbesondere am unteren Rahmenabschnitt, eingehängt. Anschließend wird der zweite Riemen 6.4 durch Ausübung einer Zugkraft auf ein freies Ende 6.4.2 desselben bei geöffneten Spannhebel 6.3.2 vorgespannt und anschließend durch Herunterklappen des Spannhebels 6.3.2 in seinen vollständig gespannten Zustand überführt.

Um auch eine Verspannung der Plane 5 in einer geringeren als der in Figur 1 dargestellten Höhe h des Daches 4.5 über dem Boden 4.4 zu ermöglichen und gleichzeitig eine Länge eines zwischen dem freien Ende 6.4.2 und dem Spannelement 6.3 befindlichen Abschnitts 6.4.3 des zweiten Riemens 6.4 möglichst klein zu halten, ist die Höheneinstellanordnung 6.6 vorgesehen, welche eingerichtet ist, das Spannelement 6.3 variabel in unterschiedlichen Abständen zum ersten Abschnitt 6.1.1 des Halteelements 6.1 und somit in unterschiedlichen Abständen zum Boden 4.4 des Fahrzeugaufbaus 4 zumindest mittelbar an der Plane 5 zu befestigen.

Hierzu umfasst die Höheneinstellanordnung 6.6 im dargestellten Ausführungsbeispiel eine an dem Halteelement 6.1 unmittelbar unterhalb des ersten Abschnitts 6.1.1 angeordnete Schlaufe 6.1.3, im dargestellten Ausführungsbeispiel eine Riemenschlaufe, welche zur Aufnahme eines als Bolzen B ausgebildeten ersten Befestigungselements 6.6.1 eingerichtet ist. Der Bolzen B ist vorliegend durch eine Schraube B.1 und eine damit korrespondierende Schraubenmutter B.2 gebildet.

Dabei sind die Schlaufe 6.1.3 und das erste Befestigungselement 6.6.1 zur Realisierung der Höheneinstellung zumindest im dargestellten geöffneten Zustand der Höheneinstellanordnung 6.6 beabstandet zu dem zweiten Abschnitt 6.1.2 des Halteelements 6.1 angeordnet.

In nicht näher dargestellten Ausführungsbeispielen sind mehrere Schlaufen 6.1.3 zwischen dem ersten Abschnitt 6.1.1 und dem zweiten Abschnitt 6.1.2 des Halteelements 6.1 ausgebildet, so dass das erste Befestigungselement 6.6.1 an unterschiedlichen Positionen am Halteelement 6.1 angeordnet werden kann.

Weiterhin umfasst Höheneinstellanordnung 6.6 ein an dem Spannelement 6.3, im dargestellten Ausführungsbeispiel am Grundkörper 6.3.1, ausgebildetes zweites Befestigungselement 6.6.2, welches eine Bolzenaufnahme BA ist. Alternativ oder zusätzlich können auch mehrere zweite Befestigungselemente 6.6.2 an unterschiedlichen Positionen am Spannelement 6.3 angeordnet sein.

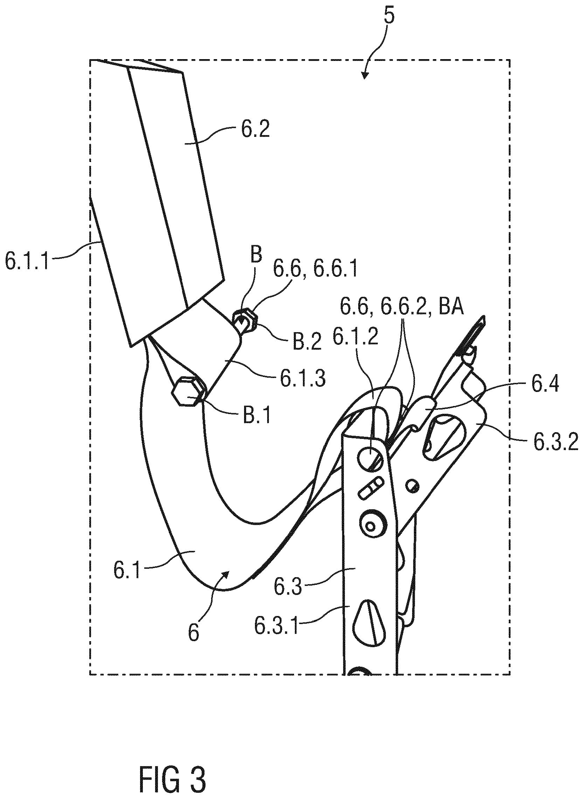

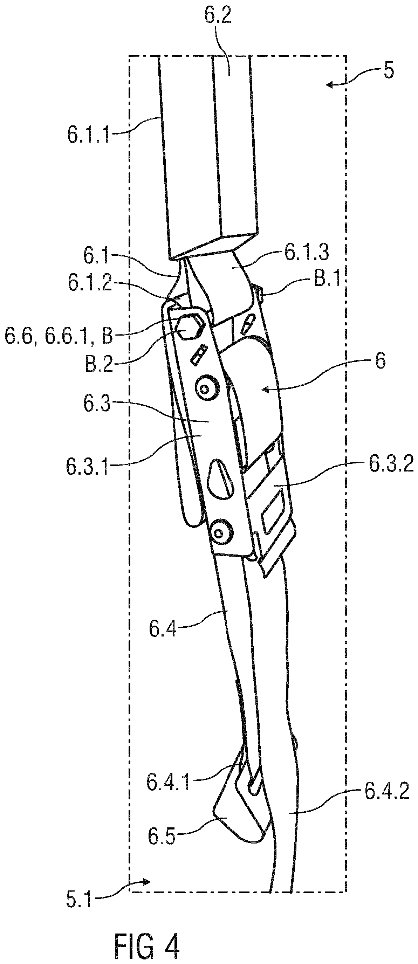

In **Figur 3** ist eine perspektivische Darstellung eines Ausschnitts der Plane 5 und des Planenverschlusselements 6 gemäß Figur 2 dargestellt, wobei sich das Spannelement 6.3 im geöffneten Zustand der Höheneinstellanordnung 6.6 zwischen einer in Figur 2 dargestellten unteren Position und einer in Figur 4 dargestellten oberen Position befindet.

**Figur 4** zeigt eine perspektivische Darstellung eines Ausschnitts der Plane 5 und des Planenverschlusselements 6 gemäß Figur 2, wobei sich das Spannelement 6.3 in einem geschlossenen Zustand der Höheneinstellanordnung 6.6 in der oberen Position befindet. Im geschlossenen Zustand der Höheneinstellanordnung 6.6 stehen das erste und das zweite Befestigungselement 6.6.1, 6.6.2 in mechanischem Wirkzusammenhang.

Hierzu ist es erforderlich, zunächst das als Bolzen B ausgebildeten erste Befestigungselement 6.6.1 aus der Schlaufe 6.1.3 zu entnehmen und die Schraubenmutter B.2 von der Schraube B.1 zu lösen. Anschließend wird das Spannelement 6.3 derart positioniert, dass sich das als Bolzenaufnahme BA ausgebildete zweite Befestigungselement 6.6.2 auf gleicher Höhe mit der Schlaufe 6.1.3 befindet, so dass die Schraube B.1 durch die Bolzenaufnahme BA und die Schlaufe 6.1.3 hindurchgeführt werden kann. Nach diesem Hindurchführen wird die Schraubenmutter B.2 wieder an der Schraube B.1 befestigt und das Spannelement ist sicher in der oberen Position an der Schlaufe 6.1.3 befestigt.

In dieser oberen Position ist eine wirksame Länge des Halteelements 6.1 verringert, zumindest nahezu halbiert.

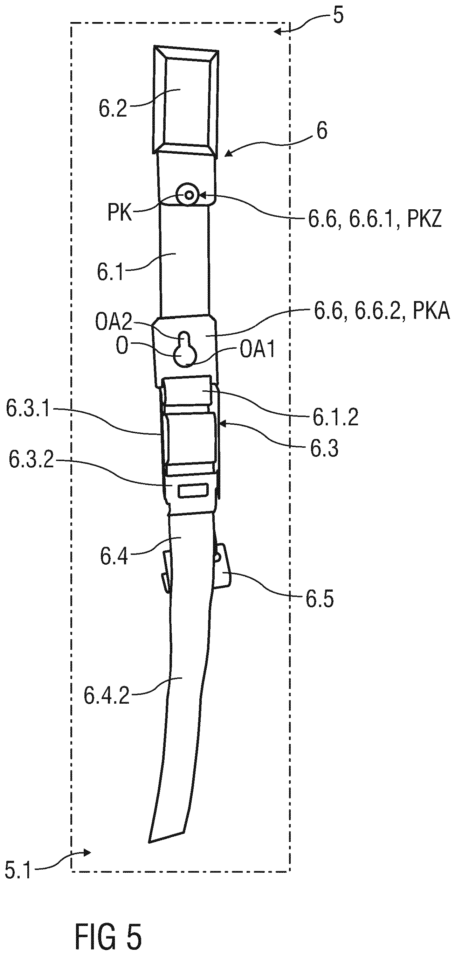

In **Figur 5** ist eine Draufsicht eines Ausschnitts einer Plane 5 eines Fahrzeugaufbaus 4 und eines zweiten Ausführungsbeispiels eines an der Plane 5 befestigten Planenverschlusselements 6 in einem geöffneten Zustand einer Höheneinstellanordnung 6.6 dargestellt.

Im Unterschied zu dem in den Figuren 2 bis 4 dargestellten ersten Ausführungsbeispiel des Planenverschlusselements 6 ist das erste Befestigungselement 6.6.1 ein Pilzkopfzapfen PKZ und das zumindest eine zweite Befestigungselement 6.6.2 ist eine Pilzkopfzapfenaufnahme PKA.

Das als Pilzkopfzapfen PKZ ausgebildete erste Befestigungselement 6.6.1 ist dabei unterhalb des Planenbefestigungselements 6.2 angeordnet, wobei der Pilzkopfzapfen PKZ mit seinem Pilzkopf PK von der Plane 5 weg weist.

Alternativ oder zusätzlich kann der Pilzkopfzapfen PKZ auch unmittelbar am Halteelement 6.1 befestigt sein oder es können mehrere Pilzkopfzapfen PKZ beabstandet zueinander am Halteelement 6.1 befestigt sein.

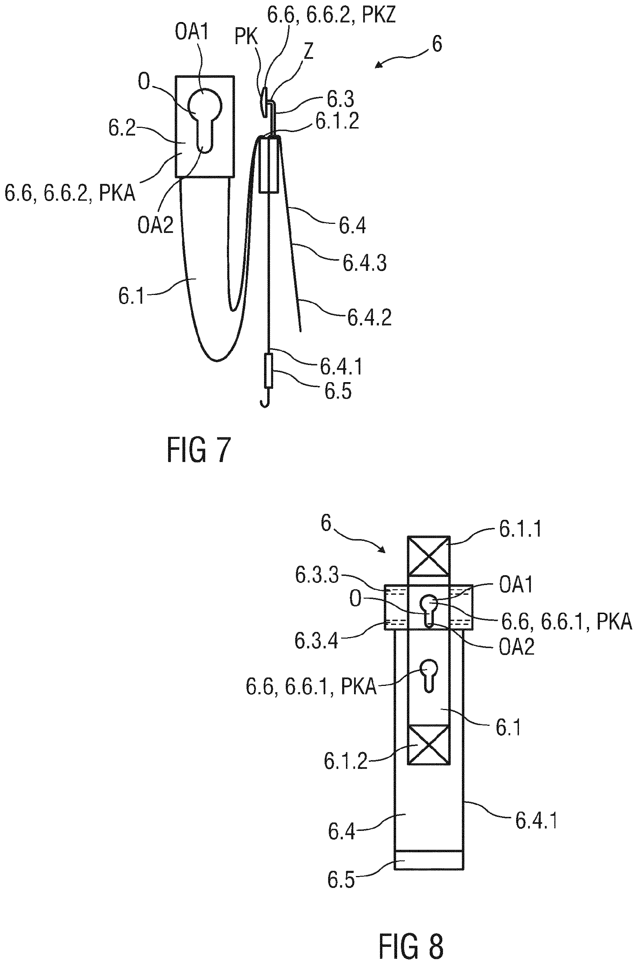

Das als Pilzkopfzapfenaufnahme PKA ausgebildete zweite Befestigungselement 6.6.2 weist eine schlüssellochförmige Öffnung O auf. Dabei ist ein erster Abschnitt OA1 der Öffnung O größer als der Pilzkopf PK des Pilzkopfzapfens PKZ und ein zweiter Abschnitt OA2 der Öffnung O ist kleiner als der Pilzkopf PK und größer als ein, beispielsweise in Figure 7 dargestellter, Zapfen Z des Pilzkopfzapfens PKZ. Hierbei ist der kleinere zweite Abschnitt OA2 oberhalb des größeren ersten Abschnitts OA1 der Öffnung O angeordnet.

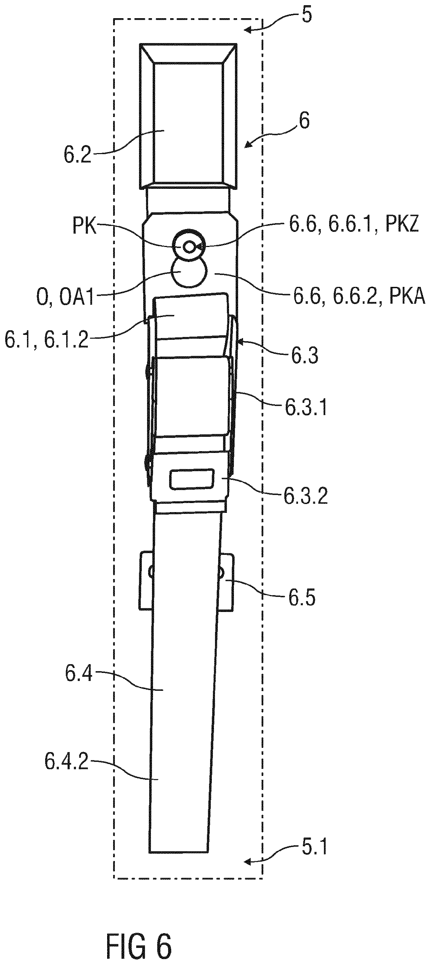

**Figur 6** zeigt eine Draufsicht eines Ausschnitts der Plane 5 des Fahrzeugaufbaus 4 und des zweiten Ausführungsbeispiels des an der Plane 5 befestigten Planenverschlusselements 6 gemäß Figur 5 in einem geschlossenen Zustand einer Höheneinstellanordnung 6.6.

Zur Überführung der Höheneinstellanordnung 6.6 in den geschlossenen Zustand, das heißt zu einer Anordnung des Spannelements 6.3 in einem größeren Abstand zum Boden 4.4 des Fahrzeugaufbaus 4 bzw. in einem kleineren Abstand zum Dach 4.5 des Fahrzeugaufbaus 4 wird das Spannelement 6.3 mit der Pilzkopfzapfenaufnahme PKA derart positioniert, dass sich der größere erste Abschnitt OA1 der Öffnung O auf gleicher Höhe mit dem Pilzkopfzapfen PKZ befindet. Anschließend wird der Pilzkopf PK durch den ersten Abschnitt OA1 der Öffnung O geführt. Darauffolgend wird der Pilzkopfzapfen PKZ, insbesondere der Zapfen Z des Pilzkopfzapfens PKZ, in den zweiten Abschnitt OA2 der Öffnung O verschoben, so dass sich der Pilzkopf PK an den den zweiten Abschnitt OA2 umgebenden Materialabschnitten der Pilzkopfzapfenaufnahme PKA abstützt. Wird anschließend das bereits in der Beschreibung zu den Figuren 2 bis 4 beschriebene Spannen des zweiten Riemens 6.4 durchgeführt, ist der zweite Abschnitt OA2 der Öffnung O der Pilzkopfzapfenaufnahme PKA sicher am Pilzkopfzapfen PKZ gehalten und gegen ein Herausgleiten gesichert.

In **Figur 7** ist eine perspektivische Ansicht eines möglichen dritten Ausführungsbeispiels eines Planenverschlusselements 6 dargestellt.

Im Unterschied zu dem in den Figuren 5 und 6 dargestellten zweiten Ausführungsbeispiel des Planenverschlusselements 6 ist das erste Befestigungselement 6.6.1 eine Pilzkopfzapfenaufnahme PKA und das zumindest eine zweite Befestigungselement 6.6.2 ist ein Pilzkopfzapfen PKZ. Dabei ist der größere erste Abschnitt OA1 der Öffnung O oberhalb des kleineren zweiten Abschnitts OA2 angeordnet, um ein Einhaken des Pilzkopfzapfens PKZ in die Pilzkopfzapfenaufnahme PKA zu ermöglichen.

Alternativ oder zusätzlich kann die Pilzkopfzapfenaufnahme PKA auch unmittelbar am Halteelement 6.1 befestigt sein oder in diesen eingebracht sein oder es können mehrere Pilzkopfzapfen PKZ beabstandet zueinander am Halteelement 6.1 befestigt und/oder in diesen eingebracht sein.

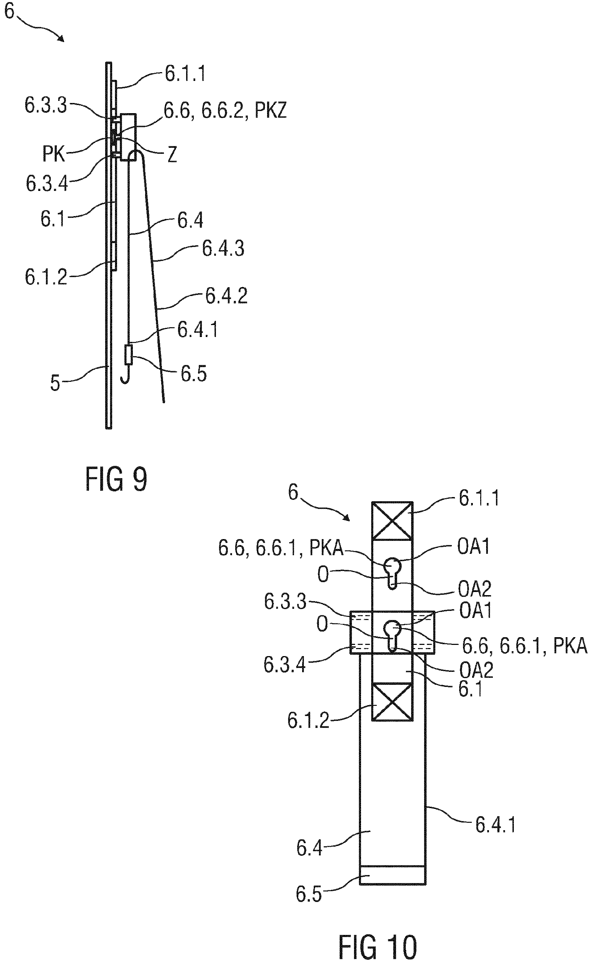

Die **Figuren 8 bis 10** zeigen in unterschiedlichen Ansichten ein mögliches viertes Ausführungsbeispiel eines Planenverschlusselements 6 in einem ersten geschlossenen Zustand (Figur 8 und 9) und einem zweiten geschlossenen Zustand (Figur 10) einer Höheneinstellanordnung 6.6 mit einer teiltransparenten Darstellung eines Spannelements 6.3 und eines zweiten Riemens 6.4.

Im Unterschied zu dem in Figur 7 dargestellten dritten Ausführungsbeispiel des Planenverschlusselements 6 ist das als erster Riemen ausgebildete Halteelement 6.1 sowohl mit seinem ersten Abschnitt 6.1.1 als auch mit dem diesem gegenüberliegenden zweiten Abschnitt 6.1.2 an der Plane 5 befestigt.

Das Spannelement 6.3 ist zwischen den beiden Abschnitten 6.1.1, 6.1.2 verschiebbar an dem Halteelement 6.1 angeordnet, wobei das Spannelement 6.3 an seiner Rückseite zwei Halteelementdurchführungen 6.3.3, 6.3.4 aufweist, durch welche das Halteelement 6.1 geführt ist. Somit ist das Spannelement 6.3 verliersicher am Halteelement 6.1 befestigt.

Zu einer Fixierung der Höheneinstellanordnung 6.6 in einer ersten oberen Position an dem Halteelement 6.1 wird diese derart positioniert, dass sich der größere erste Abschnitt OA1 der Öffnung O einer in das Halteelement 6.1 eingebrachten oberen Pilzkopfzapfenaufnahme PKA des ersten Befestigungselements 6.6.1 auf gleicher Höhe wie ein auf der Rückseite des Spannelements 6.3 angeordneter Pilzkopfzapfen PKZ des zweiten Befestigungselements 6.6.2 befindet. Anschließend wird der Pilzkopf PK durch den ersten Abschnitt OA1 der Öffnung O geführt. Darauffolgend wird der Pilzkopfzapfen PKZ, insbesondere der Zapfen Z des Pilzkopfzapfens PKZ, in den kleineren zweiten Abschnitt OA2 der Öffnung O nach unten verschoben, so dass sich der Pilzkopf PK an den den zweiten Abschnitt OA2 umgebenden Materialabschnitten der Pilzkopfzapfenaufnahme PKA abstützt. Wird anschließend das Spannen des zweiten Riemens 6.4 durchgeführt, ist der Pilzkopfzapfen PKZ sicher im zweiten Abschnitt OA2 der Öffnung O der Pilzkopfzapfenaufnahme PKA gehalten und gegen ein Herausgleiten gesichert.

Um das Spannelement 6.3 - wie in Figur 10 dargestellt - in einer zweiten unteren Position am Halteelement 6.1 zu fixieren, wird der Pilzkopfzapfen PKZ aus der oberen Pilzkopfzapfenaufnahme PKA herausgeführt und in gleicher Weise, wie zuvor für die obere Pilzkopfzapfenaufnahme PKA, in einer zweiten unteren Pilzkopfzapfenaufnahme PKA angeordnet, welche ebenfalls in das Halteelement 6.1 eingebracht ist.

### BEZUGSZEICHENLISTE

- 1: Nutzfahrzeug
- 2: Sattelzugmaschine
- 3: Sattelauflieger
- 4: Fahrzeugaufbau
- 4.1: Stirnwand
- 4.2: Rückwand
- 4.3: Seitenwand
- 4.4: Boden
- 4.5: Dach
- 5: Plane
- 5.1: oberer Planenabschnitt
- 5.2: unterer Planenabschnitt
- 6: Planenverschlusselement
- 6.1: Halteelement
- 6.1.1: erster Abschnitt
- 6.1.2: zweiter Abschnitt
- 6.1.3: Schlaufe
- 6.2: Planenbefestigungselement
- 6.3: Spannelement
- 6.3.1: Grundkörper
- 6.3.2: Spannhebel
- 6.3.3: Halteelementdurchführung
- 6.3.4: Halteelementdurchführung
- 6.4: Riemen
- 6.4.1: Abschnitt
- 6.4.2: freies Ende
- 6.4.3: Abschnitt
- 6.5: Rahmenbefestigungselement
- 6.6: Höheneinstellanordnung
- 6.6.1: erstes Befestigungselement
- 6.6.2: zweites Befestigungselement

- B: Bolzen
- B.1: Schraube
- B.2: Schraubenmutter
- BA: Bolzenaufnahme
- h, h': Höhe
- O: Öffnung
- OA1: erster Abschnitt
- OA2: zweiter Abschnitt
- PK: Pilzkopf
- PKA: Pilzkopfzapfenaufnahme
- PKZ: Pilzkopfzapfen
- Z: Zapfen

## Patentansprüche

1. Planenverschlusselement (6) für eine Plane (5) eines Fahrzeugaufbaus (4) mit
- einem Halteelement (6.1), welches an einem ersten Abschnitt (6.1.1) zu einer Befestigung an der Plane (5) eingerichtet ist,
- einem Spannelement (6.3), welches mit dem Halteelement (6.1) verbunden ist,
- einem Rahmenbefestigungselement (6.5) und
- einer Höheneinstellanordnung (6.6), welche eingerichtet ist, das Spannelement (6.3) variabel in unterschiedlichen Abständen zum ersten Abschnitt (6.1.1) des Halteelements (6.1) zumindest mittelbar an der Plane (5) zu befestigen,
**dadurch gekennzeichnet, dass**
- das Planenverschlusselement einen Riemen, welcher mit dem Spannelement (6.3) spannbar gekoppelt ist, aufweist und
- das Rahmenbefestigungselement (6.5) an einem dem Spannelement (6.3) abgewandten Abschnitt (6.4.1) des Riemens (6.4) befestigt und zu einer Befestigung an einem Rahmenabschnitt des Fahrzeugaufbaus (4) eingerichtet ist und
- das Halteelement (6.1) als Riemen ausgebildet ist.

2. Planenverschlusselement (6) nach Anspruch 1, wobei das Spannelement (6.3)
- mit einem dem ersten Abschnitt (6.1.1) gegenüberliegenden zweiten Abschnitt (6.1.2) des Halteelements (6.1) verbunden ist oder
- verschiebbar auf dem Halteelement (6.1) angeordnet ist.

3. Planenverschlusselement (6) nach Anspruch 2, wobei die Höheneinstellanordnung (6.6)
- zumindest ein an dem Halteelement (6.1) oder an einem am ersten Abschnitt (6.1.1) des Halteelements (6.1) angeordneten Planenbefestigungselement (6.2) befestigtes oder befestigbares erstes Befestigungselement (6.6.1) umfasst, welches zumindest in einem geöffneten Zustand der Höheneinstellanordnung (6.6) beabstandet zu dem zweiten Abschnitt (6.1.2) des Halteelements (6.1) angeordnet oder anordbar ist, und
- zumindest ein in Längsausdehnung des Halteelements (6.1) zwischen dem ersten und zweiten Abschnitt (6.1.1, 6.1.2) desselben an dem Halteelement (6.1) oder an dem Spannelement (6.3) befestigtes oder befestigbares zweites Befestigungselement (6.6.2) umfasst,
wobei das erste und das zweite Befestigungselement (6.6.1, 6.6.2) in mechanischen Wirkzusammenhang bringbar sind und in diesem mechanischen Wirkzusammenhang ein geschlossener Zustand der
Höheneinstellanordnung (6.6) ausgebildet ist.

4. Planenverschlusselement (6) nach Anspruch 3, wobei das zumindest eine erste Befestigungselement (6.6.1) ein Bolzen (B) ist und das zumindest eine zweite Befestigungselement (6.6.2) eine Bolzenaufnahme (BA) ist oder umgekehrt.

5. Planenverschlusselement (6) nach Anspruch 4, wobei der Bolzen (B) durch eine Schraube (B.1) und eine damit korrespondierende Schraubenmutter (B.2) gebildet ist.

6. Planenverschlusselement (6) nach Anspruch 4 oder 5, wobei das Halteelement (6.1) zumindest eine Schlaufe (6.1.3) umfasst, welche zur Aufnahme des Bolzens (B) eingerichtet ist.

7. Planenverschlusselement (6) nach Anspruch 3, wobei das zumindest eine erste Befestigungselement (6.6.1) ein Pilzkopfzapfen (PKZ) ist und das zumindest eine zweite Befestigungselement (6.6.2) eine Pilzkopfzapfenaufnahme (PKA) ist oder umgekehrt.

8. Planenverschlusselement (6) nach Anspruch 7, wobei die Pilzkopfzapfenaufnahme (PKA) eine schlüssellochförmige Öffnung (O) aufweist, wobei
- ein erster Abschnitt (OA1) der Öffnung (O) größer als ein Pilzkopf (PK) des Pilzkopfzapfens (PKZ) ist und
- ein zweiter Abschnitt (OA2) der Öffnung (O) kleiner als der Pilzkopf (PK) und größer als ein Zapfen (Z) des Pilzkopfzapfens (PKZ) ist.

9. Planenverschlusselement (6) nach Anspruch 3, wobei das zumindest eine erste Befestigungselement (6.6.1) ein Hakenelement ist und das zumindest eine zweite Befestigungselement (6.6.2) eine Hakenaufnahme ist oder umgekehrt.

10. Plane (5) für einen Fahrzeugaufbau (4), umfassend zumindest ein Planenverschlusselement (6) nach einem der vorhergehenden Ansprüche.

11. Fahrzeugaufbau (4) für ein Nutzfahrzeug (1), umfassend zumindest eine Plane (5) nach Anspruch 10.

12. Fahrzeugaufbau (4) nach Anspruch 11, umfassend
- eine Stirnwand (4.1),
- eine Rückwand (4.2),
- zwei Seitenwände (4.3),
- einen Boden (4.4) und
- ein sich zwischen der Stirnwand (4.1), der Rückwand (4.2) und den Seitenwänden (4.3) erstreckendes Dach (4.5), wobei eine Höhe (h, h') des Daches (4.5) über dem Boden (4.4) variabel einstellbar ist.

13. Fahrzeugaufbau (4) nach Anspruch 12,
- wobei zumindest eine der Seitenwände (4.3) die zumindest eine Plane (5) umfasst,
- wobei die Plane (5) in einem zumindest teilweise geschlossenen Zustand mit einem oberen Planenabschnitt (5.1) an dem Dach (4.5) und einem dem oberen Planenabschnitt (5.1) gegenüberliegenden unteren Planenabschnitt (5.2) mittels des zumindest einen Planenverschlusselements (6) gespannt an dem Boden (4.4) befestigt ist.

14. Fahrzeugaufbau (4) nach Anspruch 13, wobei sich
- bei zumindest einer ersten Höhe (h) des Daches (4.5) über dem Boden (4.4) bei geschlossener und gespannter Plane (5) die Höheneinstellanordnung (6.6) in einem geöffneten Zustand befindet und
- bei zumindest einer kleiner als die erste Höhe (h) ausgebildeten zweiten Höhe (h') des Daches (4.5) über dem Boden (4.4) bei geschlossener und gespannter Plane (5) die Höheneinstellanordnung (6.6) in einem geschlossenen Zustand befindet, in welchem das erste und das zweite Befestigungselement (6.6.1, 6.6.2) in mechanischen Wirkzusammenhang gebracht sind.

15. Fahrzeugaufbau (4) nach Anspruch 13 oder 14, wobei der obere Planenabschnitt (5.1) in Querrichtung der Plane (5) an dem Dach (4.5) verschiebbar befestigt ist.

## Claims

1. Tarpaulin-closure element (6) for a tarpaulin (5) of a vehicle body (4), having
- a retaining element (6.1), which, on a first portion (6.1.1) is designed for fastening on the tarpaulin (5),
- a tensioning element (6.3), which is connected to the retaining element (6.1),
- a frame-fastening element (6.5), and
- a height-adjustment arrangement (6.6), which is designed to fasten the tensioning element (6.3) in a variable manner, at different distances from the first portion (6.1.1) of the retaining element (6.1), at least indirectly on the tarpaulin (5), **characterized in that**
- the tarpaulin-closure element has a belt, which is coupled in a tensionable manner to the tensioning element (6.3), and
- the frame-fastening element (6.5) is fastened on a portion (6.4.1) of the belt (6.4), said portion being directed away from the tensioning element (6.3), and is designed for fastening on a frame portion of the vehicle body (4), and
- the retaining element (6.1) is designed in the form of a belt.

2. Tarpaulin-closure element (6) according to Claim 1, wherein the tensioning element (6.3)
- is connected to a second portion (6.1.2) of the retaining element (6.1), said second portion being located opposite the first portion (6.1.1), or
- is arranged in a displaceable manner on the retaining element (6.1).

3. Tarpaulin-closure element (6) according to Claim 2, wherein the height-adjustment arrangement (6.6)
- comprises at least one first fastening element (6.6.1), which is fastened or fastenable on the retaining element (6.1), or on a tarpaulin-fastening element (6.2) arranged on the first portion (6.1.1) of the retaining element (6.1), and which, at least in an open state of the height-adjustment arrangement (6.6), is arranged or arrangeable at a distance from the second portion (6.1.2) of the retaining element (6.1), and
- comprises at least one second fastening element (6.6.2), which is fastened or fastenable on the tensioning element (6.3) or on the retaining element (6.1), between the first and second portions (6.1.1, 6.1.2) thereof, as along the longitudinal extent of the retaining element (6.1), wherein the first and the second fastening elements (6.6.1, 6.6.2) can be brought into mechanical cooperation and, with this mechanical cooperation effective, a closed state of the height-adjustment arrangement (6.6) is formed.

4. Tarpaulin-closure element (6) according to Claim 3, wherein the at least one first fastening element (6.6.1) is a bolt (B) and the at least one second fastening element (6.6.2) is a bolt mount (BA), or vice versa.

5. Tarpaulin-closure element (6) according to Claim 4, wherein the bolt (B) is formed by a screw (B.1) and a corresponding screw nut (B.2).

6. Tarpaulin-closure element (6) according to Claim 4 or 5, wherein the retaining element (6.1) comprises at least one loop (6.1.3), which is designed to accommodate the bolt (B).

7. Tarpaulin-closure element (6) according to Claim 3, wherein the at least one first fastening element (6.6.1) is a mushroom-head pin (PKZ) and the at least one second fastening element (6.6.2) is a mushroom-head-pin mount (PKA), or vice versa.

8. Tarpaulin-closure element (6) according to Claim 7, wherein the mushroom-head-pin mount (PKA) has a keyhole-shaped opening (O), wherein
- a first portion (OA1) of the opening (O) is larger than a mushroom head (PK) of the mushroom-head pin (PKZ), and
- a second portion (OA2) of the opening (O) is smaller than the mushroom head (PK) and larger than a pin (Z) of the mushroom-head pin (PKZ).

9. Tarpaulin-closure element (6) according to Claim 3, wherein the at least one first fastening element (6.6.1) is a hook element and the at least one second fastening element (6.6.2) is a hook mount, or vice versa.

10. Tarpaulin (5) for a vehicle body (4), comprising at least one tarpaulin-closure element (6) according to one of the preceding claims.

11. Vehicle body (4) for a commercial vehicle (1), comprising at least one tarpaulin (5) according to Claim 10.

12. Vehicle body (4) according to Claim 11, comprising
- an end wall (4.1),
- a rear wall (4.2),
- two side walls (4.3),
- a floor (4.4), and
- a roof (4.5), which extends between the end wall (4.1), the rear wall (4.2) and the side walls (4.3), wherein a height (h, h') of the roof (4.5) above the floor (4.4) is adjustable in a variable manner.

13. Vehicle body (4) according to Claim 12,
- wherein at least one of the side walls (4.3) comprises the at least one tarpaulin (5),
- wherein, in an at least partially closed state, the tarpaulin (5) is fastened with an upper tarpaulin portion (5.1) on the roof (4.5) and with a lower tarpaulin portion (5.2), which is located opposite the upper tarpaulin portion (5.1), on the floor (4.4), with tensioning provided by means of the at least one tarpaulin-closure element (6).

14. Vehicle body (4) according to Claim 13, wherein,
- in the case of at least a first height (h) of the roof (4.5) above the floor (4.4), with the tarpaulin (5) closed and tensioned, the height-adjustment arrangement (6.6) is in an open state, and
- in the case of at least a second height (h') of the roof (4.5) above the floor (4.4), said second height being smaller than the first height (h), with the tarpaulin (5) closed and tensioned, the height-adjustment arrangement (6.6) is in a closed state, in which the first and the second fastening elements (6.6.1, 6.6.2) have been brought into mechanical cooperation.

15. Vehicle body (4) according to Claim 13 or 14, wherein the upper tarpaulin portion (5.1) is fastened on the roof (4.5) in a displaceable manner in the transverse direction of the tarpaulin (5).

## Revendications

1. Élément de fermeture de bâche (6) pour une bâche (5) d'une structure de véhicule (4) comportant
- un élément de retenue (6.1), lequel est conçu pour une fixation à la bâche (5) au niveau d'une première partie (6.1.1),
- un élément de tension (6.3), lequel est relié à l'élément de retenue (6.1),
- un élément de fixation à un cadre (6.5) et
- un ensemble de réglage en hauteur (6.6), lequel est conçu pour fixer l'élément de tension (6.3) au moins indirectement à la bâche (5) de manière variable à différentes distances de la première partie (6.1.1) de l'élément de retenue (6.1), **caractérisé en ce que**
- l'élément de fermeture de bâche comprend une courroie, laquelle est accouplée à l'élément de tension (6.3) de manière à pouvoir être tendue, et
- l'élément de fixation à un cadre (6.5) est fixé à une partie (6.4.1) de la courroie (6.4) opposée à l'élément de tension (6.3) et est conçu pour une fixation à une partie de cadre de la structure de véhicule (4) et
- l'élément de retenue (6.1) est réalisé sous forme de courroie.

2. Élément de fermeture de bâche (6) selon la revendication 1, dans lequel l'élément de tension (6.3)
- est relié à une deuxième partie (6.1.2) de l'élément de retenue (6.1) opposée à la première partie (6.1.1) ou
- est disposé de manière déplaçable sur l'élément de retenue (6.1).

3. Élément de fermeture de bâche (6) selon la revendication 2, dans lequel l'ensemble de réglage en hauteur (6.6)
- comporte au moins un premier élément de fixation (6.6.1) fixé ou pouvant être fixé à l'élément de retenue (6.1) ou à un élément de fixation de bâche (6.2) disposé au niveau de la première partie (6.1.1) de l'élément de retenue (6.1), lequel premier élément de fixation est disposé ou peut être disposé de manière espacée de la deuxième partie (6.1.2) de l'élément de retenue (6.1) au moins dans un état ouvert de l'ensemble de réglage en hauteur (6.6), et
- comporte au moins un deuxième élément de fixation (6.6.2) fixé ou pouvant être fixé à l'élément de retenue (6.1) ou à l'élément de tension (6.3) dans l'étendue longitudinale de l'élément de retenue (6.1) entre la première et la deuxième partie (6.1.1, 6.1.2) de celui-ci,
dans lequel le premier et le deuxième élément de fixation (6.6.1, 6.6.2) peuvent être amenés en liaison fonctionnelle mécanique et, dans cette liaison fonctionnelle mécanique, un état fermé de l'ensemble de réglage en hauteur (6.6) est réalisé.

4. Élément de fermeture de bâche (6) selon la revendication 3, dans lequel l'au moins un premier élément de fixation (6.6.1) est un boulon (B) et l'au moins un deuxième élément de fixation (6.6.2) est un logement de boulon (BA) ou inversement.

5. Élément de fermeture de bâche (6) selon la revendication 4, dans lequel le boulon (B) est formé par une vis (B.1) et un écrou (B.2) correspondant à celle-ci.

6. Élément de fermeture de bâche (6) selon la revendication 4 ou 5, dans lequel l'élément de retenue (6.1) comporte au moins une boucle (6.1.3), laquelle est conçue pour le logement du boulon (B).

7. Élément de fermeture de bâche (6) selon la revendication 3, dans lequel l'au moins un premier élément de fixation (6.6.1) est un ergot à tête de champignon (PKZ) et l'au moins un deuxième élément de fixation (6.6.2) et un logement d'ergot à tête de champignon (PKA) ou inversement.

8. Élément de fermeture de bâche (6) selon la revendication 7, dans lequel le logement d'ergot à tête de champignon (PKA) comprend une ouverture (O) en forme de trou de serrure, dans lequel
- une première partie (OA1) de l'ouverture (O) est plus grande qu'une tête de champignon (PK) de l'ergot à tête de champignon (PKZ) et
- une deuxième partie (OA2) de l'ouverture (O) est plus petite que la tête de champignon (PK) et plus grande qu'un ergot (Z) de l'ergot à tête de champignon (PKZ).

9. Élément de fermeture de bâche (6) selon la revendication 3, dans lequel l'au moins un premier élément de fixation (6.6.1) est un élément crochet et l'au moins un deuxième élément de fixation (6.6.2) est un logement de crochet ou inversement.

10. Bâche (5) pour une structure de véhicule (4), comportant au moins un élément de fermeture de bâche (6) selon l'une des revendications précédentes.

11. Structure de véhicule (4) pour un véhicule utilitaire (1), comportant au moins une bâche (5) selon la revendication 10.

12. Structure de véhicule (4) selon la revendication 11, comportant
- une paroi frontale (4.1),
- une paroi arrière (4.2),
- deux parois latérales (4.3),
- un plancher (4.4) et
- un toit (4.5) s'étendant entre la paroi frontale (4.1), la paroi arrière (4.2) et les parois latérales (4.3), dans lequel une hauteur (h, h') du toit (4.5) au-dessus du plancher (4.4) est réglable de manière variable.

13. Structure de véhicule (4) selon la revendication 12,
- dans laquelle au moins l'une des parois latérales (4.3) comporte l'au moins une bâche (5),
- dans laquelle la bâche (5) est, dans un état au moins partiellement fermé, fixée au toit (4.5) par une partie de bâche supérieure (5.1) et fixée au plancher (4.4) par une partie de bâche inférieure (5.2) opposée à la partie de bâche supérieure (5.1) de manière tendue au moyen de l'au moins un élément de fermeture de bâche (6).

14. Structure de véhicule (4) selon la revendication 13, dans laquelle
- dans le cas d'au moins une première hauteur (h) du toit (4.5) au-dessus du plancher (4.4) en cas de bâche (5) fermée et tendue, l'ensemble de réglage en hauteur (6.6) se trouve dans un état ouvert et
- dans le cas d'au moins une deuxième hauteur (h'), réalisée de manière inférieure à la première hauteur (h), du toit (4.5) au-dessus du plancher (4.4) en cas de bâche (5) fermée et tendue, l'ensemble de réglage en hauteur (6.6) se trouve dans un état fermé dans lequel le premier et le deuxième élément de fixation (6.6.1, 6.6.2) sont amenés en liaison fonctionnelle mécanique.

15. Structure de véhicule (4) selon la revendication 13 ou 14, dans laquelle la partie de bâche supérieure (5.1) est fixée de manière déplaçable au toit (4.5) dans la direction transversale de la bâche (5).
